(19) **Europäisches Patentamt**
**European Patent Office**
**Office européen des brevets**

(11) **EP 4 308 901 B1**

(12) **EUROPEAN PATENT SPECIFICATION**

(45) Date of publication and mention
of the grant of the patent:
**29.10.2025 Bulletin 2025/44**

(21) Application number: **22711556.5**

(22) Date of filing: **10.03.2022**

(51) International Patent Classification (IPC):
**G01N 15/14** *(2024.01)* **G01N 15/10** *(2024.01)*

(52) Cooperative Patent Classification (CPC):
**G01N 15/1434; G01N 15/147;** G01N 2015/1027;
G01N 2015/1029; G01N 2015/103

(86) International application number:
**PCT/EP2022/056236**

(87) International publication number:
**WO 2022/194676 (22.09.2022 Gazette 2022/38)**

(54) **METHOD AND DEVICE FOR DETERMINING THE SHAPE OF PARTICLES IN MOTION USING AN EVENT-BASED CAMERA**

VERFAHREN UND VORRICHTUNG ZUR MESSUNG VON EIGENSCHAFTEN VON TEILCHEN IN BEWEGUNG MIT EINER EREIGNISBASIERTEN KAMERA

PROCÉDÉ ET DISPOSITIF POUR MESURER LES ATTRIBUTS DES PARTICULES EN MOUVEMENT À L'AIDE D'UNE CAMÉRA BASÉE SUR DES ÉVÉNEMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2021 EP 21162651**

(43) Date of publication of application:
**24.01.2024 Bulletin 2024/04**

(73) Proprietor: **Prophesee**
**75012 Paris (FR)**

(72) Inventors:
• **VEJARANO, Camilo**
**92800 Puteaux (FR)**
• **ROUCH, Thomas**
**94300 Vincennes (FR)**

(74) Representative: **de Jong, Jean Jacques**
**Omnipat**
**610 Chemin de Fabrègues**
**13510 Éguilles (FR)**

(56) References cited:
**WO-A1-2020/056422** **KR-A- 20160 102 757**
**US-A1- 2019 391 067** **US-B2- 7 920 261**

## Description

## Field

The present disclosure relates to the measurement of particle attributes, such as speed and size, using optical systems.

## Background

Various types of systems exist for measuring various particle attributes, such as concentration and size.

In certain so-called direct imaging systems, a halogen light illuminates particles from the back within a chamber, while a high definition, high magnification camera records passing particles. Recorded video is then analyzed by computer software to measure particle attributes.

Such systems are not adapted to some applications due to the complexity of the image processing and the relatively low frame rate of the cameras.

Patent application US2019-0391067 discloses a system for counting and measuring the speed of analytes crossing a region of interest in a channel. The region of interest is defined by two spaced apart rows of imager pixels perpendicular to the channel. The system cannot determine the shape of the analytes.

## Summary

A method for measuring attributes of a particle in motion is generally provided, comprising observing a region of interest with an event-based sensor oriented such that lines of a pixel array of the sensor lie across an expected trajectory of the particle through the region of interest; defining two reference lines of pixels separated by a spatial distance; sampling a first group of events produced by a first of the two reference lines; sampling a second group of events produced by the second of the two reference lines; determining a temporal distance between the second and first groups of events; and providing a longitudinal speed factor of the particle based on the spatial distance and the temporal distance. The particles have a size spanning multiple adjacent pixels in a line, and the method further comprises analyzing one of the first and second groups of events over multiple time steps in order to produce an outline of the particle in space-time coordinates including spatial components based on positions of event-triggered pixels in the lines and temporal components based on the time steps; and converting the space-time coordinates of the outline to spatial coordinates by multiplying the time steps of the space-time coordinates by the longitudinal speed factor.

The method may further comprise measuring respective event rates produced by the two reference lines over multiple time steps; storing a first time step where the event rate measured for the first group of events exceeds a threshold; storing a second time step where the event rate measured for the second group of events exceeds the threshold; and providing the temporal distance as the difference between the second and first time steps.

The method may further comprise the step of measuring each event rate by aggregating events produced by a group of multiple adjoining lines including the corresponding reference lines.

The method may further comprise analyzing the first and second groups of events over multiple time steps in order to produce respective first and second outlines of the particle in space-time coordinates; and cross-correlating the first and second outlines to determine the temporal distance used for determining the longitudinal speed factor.

The method may further comprise, in cross-correlating the outlines, also determining a transversal spatial shift between the outlines in the direction of the lines; providing a transversal speed factor by dividing the transversal spatial shift by the temporal distance; and, in converting the space-time coordinates to spatial coordinates, correcting the spatial components of the space-time coordinates based on the time steps and the transversal speed factor.

The method may further comprise the step of determining size attributes of the particle based on the outline in spatial coordinates.

The method may further comprise the step of determining the volume of the particle based on the outline in spatial coordinates and an assumption on the cross-section of the particle perpendicular to the longest axis of the outline.

The method may further comprise using multiple thresholds to determine multiple corresponding temporal distances; and averaging the temporal distances.

A droplet attribute analysis arrangement is also provided, comprising a nozzle configured to project droplets on a surface; an event-based camera fixedly attached to the nozzle; and an optical device attached to the nozzle, oriented such that it allows the camera to observe a region of interest between the nozzle and the surface; wherein the camera includes a processor programmed to observe the region of interest with an event-based sensor oriented such that lines of a pixel array of the sensor lie across an expected trajectory of the particle (P) through the region of interest; define two reference lines of pixels separated by a spatial distance; sample a first group of events produced by a first of the two reference lines; sample a second group of events produced by the second of the two reference lines; determine a temporal distance between the second and first groups of events; provide a longitudinal speed factor of the particle based on the spatial distance and the temporal distance; the particles having a size spanning multiple adjacent pixels in a line, and analyzing one of the first and second groups of events over multiple time steps in order to produce an outline of the particle in space-time coordinates including spatial components based on positions of event-triggered pixels in the lines and temporal components based on the time steps; and converting the space-time coordinates of the outline to spatial coordinates by multiplying the time steps of the space-time coordinates by the longitudinal speed factor.

**Brief Description of Drawings**

Other advantages and features will become more clearly apparent from the following description of particular embodiments of the invention provided for exemplary purposes only and represented in the appended drawings, in which:

- Figure 1 schematically shows an organization of an event-based sensor array, wherein two selected rows of pixels are used for measuring attributes of particles crossing the field of view of the sensor perpendicularly to the rows;
- Figure 2 shows an exemplary and near ideal event rate evolution of a row crossed by a particle;
- Figure 3 shows exemplary event rate evolutions of the two rows, as a particle crosses the two rows in sequence;
- Figure 4 shows an alternative organization of an event-based sensor array, including two groups of adjoining rows;
- Figure 5 shows exemplary event rate evolutions in the sensor organization of figure 4, as a particle crosses the two groups of rows in sequence;
- Figure 6 schematically shows an exemplary event-based camera arrangement, configured to measure attributes of droplets produced by a moving nozzle;
- Figure 7 shows the event-based array organization of figure 1, viewing multiple particles crossing the two rows simultaneously; and
- Figures 8A and 8B illustrate two steps in a process for measuring attributes of the multiple particles crossing the rows.

**Description of Embodiments**

Direct imaging particle analyzers, due to the complex image processing they implement, do not allow real-time analysis of a flow of particles, and are not suited, for instance, for continuous process monitoring systems. Moreover, typical frame rates of the cameras are not adapted to fast flows of particles within a reduced volume, such as the case of nozzles projecting fluids on a surface only a few millimeters away. For instance, in the case of inkjet printers, ink droplets may be projected at 10 m/s over a distance seldom exceeding 5 mm, whereby the droplet can only be seen by the camera for less than 0,5 ms.

The present disclosure overcomes such limitations by using specific features of an event-based camera and of the data such a camera produces. Event-based cameras can react fast enough in such circumstances and are small enough to analyze constricted regions of interest, such as between an inkjet nozzle and the projection surface. Also, the specific nature of the data produced by an event-based camera may be manipulated to reduce the processing complexity, to the extent that the resulting particle analyzer can be used in real-time.

In particular, although an event-based camera may include a sensor array having many rows and columns of pixels, conforming for instance to the VGA standard, the array will not be used to capture 2D images for processing, in the manner images could be processed conventionally with a frame-based camera. Instead, a few reference rows dispersed in the array will be used in a scanner mode, oriented perpendicular to the expected trajectory of the particles. As little as two reference rows may be sufficient to perform particle attribute measurements, such as speed and size.

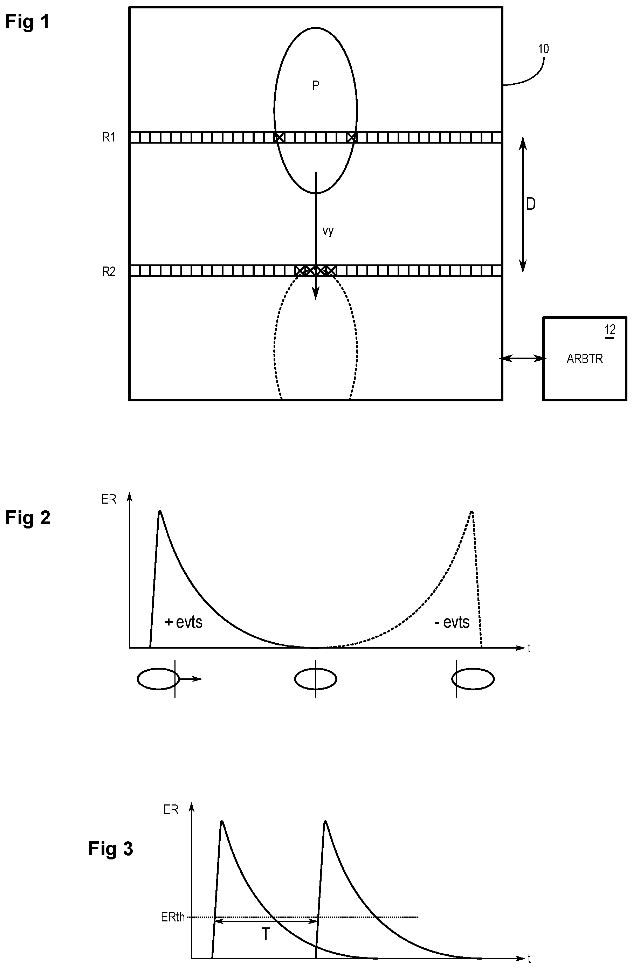

Figure 1 schematically illustrates a sensor array 10 of an event-based camera, arranged such that particles P travelling through a region of interest cross the field of vision of the camera perpendicularly to the rows.

Each pixel of an event-based sensor array is designed to generate an "event" asynchronously each time its measured brightness changes by more than a threshold value. Events usually convey a direction indication, i.e. a positive direction for an increase in brightness and a negative direction for a decrease in brightness. The events are typically signaled as they come to an arbiter and readout circuit 12. The arbiter circuit organizes the readout of the signaled events. A read out event is completed with a timestamp corresponding, for instance, to the time of readout and a position corresponding to the address of the pixel in the array.

In figure 1, two reference rows R1, R2, separated by a distance D on the sensor array, are selected for the analysis process. The two rows are located, for instance, at 1/3 and 2/3 of the array height.

In travelling across the field of view, a particle P crosses rows R1 and R2 in turn. Two positions of the particle P are shown at different times, respectively in solid and dotted lines.

In the first position, the particle is almost halfway across row R1 and the edges of the particle intersect the row at only two pixels, on either side of the particle, marked by crosses. In this situation, assuming the body of the particle has a uniform shade contrasting with the background, very few pixels of the row, only those that see the edges of the particle, generate an event. In fact, even no event may be generated if the edges of the particle are perpendicular to the row.

In the second position, the particle is about to leave row R2, and its trailing edge intersects row R2 at four adjacent pixels, marked by crosses. In this situation, where the edge intersecting the row is almost parallel to the row, many pixels may generate an event.

Figure 2 shows an exemplary and near ideal event rate evolution ER of a row crossed by an ellipsoidal particle such as that of figure 1. The event rate is the number of events read out per unit of time, as defined, for instance, by a clock used to assign the timestamps. The unit of time may be as small as 5 μs.

When the leading edge of the particle hits the row, many pixels of the row see a change and the event rate raises abruptly. The events are shown as positive, i.e. the pixels sense an increase in brightness, assuming the body of the particle has a lighter shade than the background, which corresponds to a region of interest illuminated from the front.

When the leading edge has crossed the row, the positive event rate gradually decreases as the edges of the particle tend to become perpendicular to the row. The event rate is minimal when the particle is halfway across the row.

As the particle departs from the middle position, the edges depart from their perpendicular stance, causing the generation of opposite polarity events, i.e. negative events.

The negative event rate reaches a peak about when the trailing edge of the particle reaches the row. After that, the negative event rate decreases abruptly towards zero.

Figure 3 shows exemplary event rate evolutions of the two rows R1, R2, as the particle crosses the two rows in sequence. In the present situation, only one type of events may be analyzed, for instance the positive events, which arrive first. As shown, each of the rows produces a similar event rate curve, separated in time by a value T. The value T is the time taken by the particle to travel, in the region of interest, from the position corresponding to row R1 to the position corresponding to row R2.

By determining the time T, a longitudinal speed vy (indicated in figure 1) may be calculated as D/T, where D is the distance on the sensor array between the two rows R1, R2, i.e. D is an image plane distance, whereby vy is an image plane speed. Knowing the object plane distance D' corresponding to the image plane distance D, and assuming the particles travel vertically, the vertical object plane speed Vy of the particle is calculated as $Vy = vy \cdot D'/D = D'/T$.

The object plane distance D' may be determined based on the distances of the particle and the sensor array from the focal point of the camera's lens.

Value T is the temporal distance between the event rate curves produced by the two rows R1, R2. It may conventionally be determined by cross-correlating the two curves. In the present situation, the characteristic steep rising edges of the positive event rate curves allow using a simpler method - the event rates are compared to a threshold ERth, and the time T is the difference between the times when the event rates of rows R1 and R2 each exceed the threshold, as shown.

With this organization, high particle speeds may be measured in constrained regions of interest, with low complexity processing.

The remaining information from the events may be used to determine the particle size. Indeed, the addresses of the events determine the positions of the edges of the particle, i.e. the outline of the particle. More specifically, the leading edge of the particle is outlined by the first batch of events (the positive events when the particle body is of a lighter shade than the background), then the trailing edge is outlined by the second batch of events (the negative events). By recording the event positions over multiple time steps for one of the rows, an outline of the particle is produced in space-time coordinates (x, t), where the spatial components x are the positions of the events in the row and the temporal components t are the time steps.

With such coordinates, the outline does not actually represent the spatial shape of the particle, since similar outlines would be produced for a short slow-moving particle and an elongated fast-moving particle.

To produce an outline in spatial coordinates, the temporal components t of the outline in space-time coordinates are simply multiplied by the calculated speed (Vy or vy).

Once the outlines are defined in spatial coordinates, various attributes may be calculated from the outlines, such as width and length from the smallest and largest axes of the outline. Based on assumptions on the cross-section of the particles perpendicular to the longest axis of the outlines, volumes may also be calculated from the outlines. For instance, projected droplets will typically have a revolution shape around their longest axis, which will usually be along the droplet trajectory.

When determining the temporal distance T based on threshold detections as exemplified above, using only single rows may in practice cause inaccuracies due to noise and the production of a relatively small number of events, especially when the particles are narrow, i.e. spanning only a few pixels of the rows.

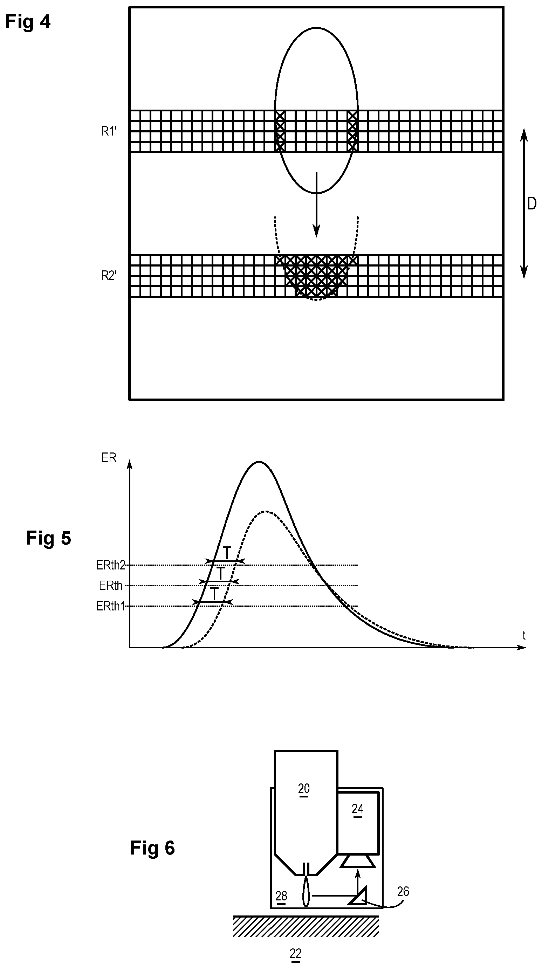

Figure 4 illustrates a more robust organization of a sensor array for use with threshold detections. Each of the rows is replaced by a group R1', R2' of adjoining rows. The events produced by the rows of each group are aggregated to produce an event rate for the group. The event rate is thus multiplied by the number of rows in each group. Moreover, an averaging effect is produced that spreads the event rate curves.

Figure 5 shows exemplary positive event rate evolutions in the sensor organization of figure 4, as a particle crosses the two groups of rows in sequence. In comparison with the curves of figure 3, those of figure 5 are more spread out and the rising edges are less abrupt. Also, the second curve, shown in dotted lines, is exemplified as being squatter than the first curve, which illustrates a variation in shape of the particle, for instance a droplet that elongates and becomes narrower between the two groups of rows.

Even if the particle shape varies, it appears that the rising speeds of the two curves are similar, because they correspond to the maximum speed at which a burst of events is processed by the system, irrespective of the number of events in the burst. With such a characteristic, the threshold detection method remains valid for determining the temporal distance T between the curves. In order to increase robustness, multiple thresholds ERth, ERth1, ERth2 may be used similarly, as shown, and an average is produced over the temporal distances T resulting from the multiple thresholds.

This more robust method for determining the temporal distance T may be combined with the use of single rows for determining the particle outline, as explained above.

Figure 6 schematically shows an exemplary event-based camera arrangement, configured to measure attributes of droplets produced by a moving dispenser nozzle, such as ink droplets projected by an inkjet printer. The nozzle 20 may be configured to scan a surface 22 at a constant distance, typically a few millimeters, and to project droplets of an accurate volume at accurate positions. The projection speed is also an important quality factor in such devices.

An event-based camera 24 operating according to the principles mentioned above may be attached to the nozzle, oriented to observe the surface 22. An optical device 26 such as a mirror, prism or optical fibers may be placed in front of the camera lens such that the region of interest between the nozzle and the surface is fed back to the camera lens. A small light source, such as an LED, not shown, may be attached next to the mirror to illuminate the region of interest. The camera, mirror and light source may be attached to a plate 28 that is in turn attached to a side of the nozzle.

An event-based camera is well adapted to such an arrangement, because it can be made small and light enough to not impede proper operation of the nozzle, while offering the required speed and resolution for the particle analysis needs.

The particle analyzer arrangements discussed up to now are well adapted to the analysis of particles that cross the rows one at a time, i.e. particles that are produced in sequence from a single source, or particles that are not produced simultaneously from multiple sources.

Analyzer arrangements disclosed hereinafter are, in contrast, adapted to situations where multiple particles may cross a row simultaneously.

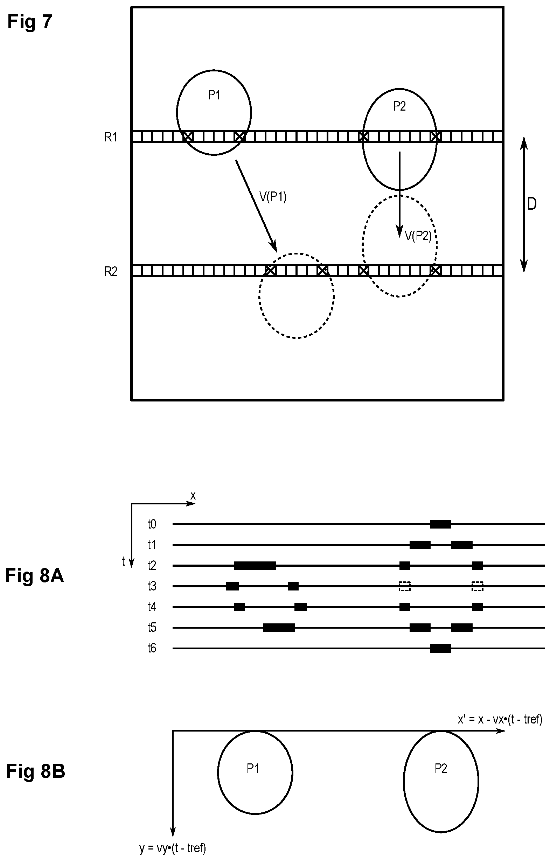

In figure 7, with an event-based sensor array arrangement similar to that of figure 1, two particles P1 and P2 cross the region of interest substantially simultaneously, as an example. In particular, there is a time overlap where particles P1 and P2 simultaneously intersect row R1, and a time overlap where they simultaneously intersect row R2. The particles P1 and P2 have respective different speeds V(P1) and V(P2), and particle P1 moves obliquely instead of vertically, and faster than particle P2. Speed V(P1) is thus a vector having a vertical or longitudinal speed component vy, and a transversal speed component vx. Speed V(P2) may also be considered as a vector, having a zero transversal speed component.

In such a situation, since two or more particles may intersect a row simultaneously, a criterion based solely on the event rates is not adapted for differentiating individual particles.

In order to differentiate the particles, the positions of the events are now used to produce outlines in space-time coordinates for each row. Events read out for a row may thus define multiple closed outlines, where each closed outline corresponds to an individual particle.

Figure 8A illustrates what the row R1 could yield in the example of figure 7, over successive time steps t0-t7.

At a time step t0, the leading edge of particle P2 hits row R1, intersecting for example two adjacent pixels. The events generated by these two pixels, e.g. of positive polarity when the particle body shade is lighter than the background, define two points of the beginning of the outline of particle P2.

At time step t1, the leading edge of particle P2 intersects the row at two separated pairs of pixels. The events generated by these pixels define four new points of the outline of particle P2.

At time step t2, the leading edge of particle P1 hits the row, intersecting for example four adjacent pixels, while the leading edge of particle P2 intersects two new separated pixels. Now three separated groups of positive events are generated in the row, and a decision needs to be taken as to the points that belong to the outline of particle P2, and the points that could belong to a new particle.

Obviously, the two right-most points belong to the outline of particle P2, since the pixels in between have not changed and assume the values they acquired at steps t0 and t1.

In practice, due to noise, blurry edges, or shade variations, pixels within the particle body or nearby may spuriously change, and decisions as to the number of particles and the pixels belonging to the particles are not that clear, at least when observing only the current row and its immediate history. In such circumstances, known object separation algorithms may be used, even if they have been implemented with frame-based imagers. For instance, Subramanian S. et Al., "A Memory Efficient Algorithm for Real Time Object Counting", in 2009 IEEE International Advance Computing Conference (IACC 2009), disclose a simple algorithm based on the analysis of two adjacent rows of a frame-based scanner. The two adjacent rows, in frame-based mode, represent a current row and its immediate history, which is analogous, in the present situation, to the same event-based row observed at two consecutive time steps.

At time step t3, two new points are defined for the outline of particle P1, whereas no changes occur for particle P2, because the edges of particle P2 are perpendicular to the row. In this case, the previous two points found for the outline are duplicated, as shown in dotted lines.

At time step t4, the trailing edges of particles P1 and P2 intersect the row, each at two separate pixels. This time the intersected pixels generate events of negative polarity, which are also counted as outline pixels.

At time step t5, the trailing edge of particle P1 leaves the row, while the trailing edge of particle P2 still intersects the row.

At time step t6, the trailing edge of particle P2 leaves the row.

At this stage, two outlines have been produced in space-time coordinates for row R1, belonging to two distinct particles. The outlines may be stored individually in a running list of particles "detected" by row R1, with a reference timestamp, such as the time step at which the trailing edge leaves the row, i.e. t5 for particle P1 and t6 for particle P2.

It can be noted that the dimensions of the particle outlines along the time axis do not match the spatial dimensions shown in figure 7. Moreover, due to the oblique trajectory of particle P1, the outline is skewed. As mentioned before, such outlines in space-time coordinates cannot be directly used to evaluate the particle sizes. For that purpose, the outlines are converted to spatial coordinates using the particle speeds, the speeds being determined, for instance, as follows.

Row R2 is processed similarly as row R1 to trace the outline of each particle that crosses row R2 in space-time coordinates. Then, each time a particle leaves the row, it is compared to the particles stored in the running list, for instance using cross-correlation. In principle, assuming speed and rotation do not vary over the very short distance of the region of interest, the corresponding outlines should match closely.

When a match is found, a displacement vector is formed with a spatial component d equal to the difference between the transversal components of the matching outlines, and a time component T equal to the difference between the reference timestamps of the outlines.

A speed vector V(P) is determined having a transversal component vx = d/T and a longitudinal component vy = D/T, where d and D are distances in the image plane, that can also be converted to distances in the object plane to produce a speed vector in the object plane.

As shown in figure 8A, finally, the matching outline from the running list is converted to spatial coordinates (x', y') and de-skewed by applying vector V(P) to the space-time coordinates (x, t), i.e.

$$x' = x - vx \cdot (t - tref)$$

$$y' = vy \cdot (t - tref)$$

Where tref is the reference timestamp stored with the outline in the running list.

The matching outline may then be removed from the running list in order to reduce the number of comparisons required for processing the next particles leaving row R2.

The particle analysis method is thus applicable to multiple particles travelling at different speeds and even different angles. However, when the travel angles are different, it is possible that particles come to overlap temporarily, in particular when crossing one of the rows R1, R2. In such a case, the particles are not separable by analyzing one of the rows, whereby the matching operation at row R2 will fail by missing at least one of the two overlapping particles.

In order to overcome this situation, more than two reference rows may be distributed over the sensor array. In such a case, when two particles overlap at one row, at least two other rows will see the particles separated, and can be used as explained above.

In other words, for each row but the last, a running list of outlines is maintained. If a particle leaving the second row does not find a match in the first running list, its outline is stored in the second running list. Then, when the particle leaves the third row, its outline is searched in the second running list, and a match will be found there, in principle, which means that the particle was hidden by another particle when crossing the first row.

If a particle is hidden when crossing the second row, no matching operation is triggered by the particle, but the first running list will contain a matching outline from when the particle crossed the first row. A matching operation is triggered when that particle crosses the third row - no match being found then in the second list, a matching operation is attempted with the first list, which then succeeds.

Multiplying the number of reference rows in this way not only overcomes the difficulties of overlapping particles, but also makes the system more robust to noise.

The above embodiments have been described with reference to rows of pixels of a sensor array, because sensor arrays are typically processed row by row, and therefore the use of rows for analyzing moving particles is straightforward. However, depending on the circumstances, other pixel alignments may be used, such as columns, diagonals, or even curved or arcuate lines of pixels.

**Claims**

1. A computer implemented method for measuring attributes of a particle in motion, comprising:

    • observing a region of interest with an event-based sensor oriented such that lines of a pixel array of the sensor lie across an expected trajectory of the particle (P) through the region of interest;
• defining two reference lines of pixels (R1, R2) separated by a spatial distance (D);
• sampling a first group of events produced by a first of the two reference lines;
• sampling a second group of events produced by the second of the two reference lines;
• determining a temporal distance (T) between the second and first groups of events; and
• providing a longitudinal speed factor (vy) of the particle based on the spatial distance and the temporal distance;

**characterized in that** the particles have a size spanning multiple adjacent pixels in a line, and the method comprises the following additional steps:

• analyzing one of the first and second groups of events over multiple time steps in order to produce an outline of the particle in space-time coordinates (x, t) including spatial components based on positions of event-triggered pixels in the lines and temporal components based on the time steps; and
• converting the space-time coordinates of the outline to spatial coordinates (x', y') by multiplying the time steps (t) of the space-time coordinates by the longitudinal speed factor (vy).

2. The method of claim 1, comprising:

• measuring respective event rates (ER) produced by the two reference lines over multiple time steps;
• storing a first time step where the event rate measured for the first group of events exceeds a threshold (ERth);
• storing a second time step where the event rate measured for the second group of events exceeds the threshold (ERth); and
• providing the temporal distance (T) as the difference between the second and first time steps.

3. The method of claim 2, comprising the step of measuring each event rate by aggregating events produced by a group of multiple adjoining lines including the corresponding reference lines.

4. The method of claim 1, comprising:

• analyzing the first and second groups of events over multiple time steps in order to produce respective first and second outlines of the particle in space-time coordinates (x, t); and
• cross-correlating the first and second outlines to determine the temporal distance (T) used for determining the longitudinal speed factor (vy).

5. The method of claim 4, comprising:

• in cross-correlating the outlines, also determining a transversal spatial shift between the outlines in the direction (x) of the lines;
• providing a transversal speed factor (vx) by dividing the transversal spatial shift by the temporal distance; and
• in converting the space-time coordinates to spatial coordinates, correcting the spatial components of the space-time coordinates based on the time steps and the transversal speed factor (vx).

6. The method of claim 1, comprising the step of determining size attributes of the particle based on the outline in spatial coordinates.

7. The method of claim 1, comprising the step of determining the volume of the particle based on the outline in spatial coordinates and an assumption on the cross-section of the particle perpendicular to the longest axis of the outline.

8. The method of claim 2, comprising:

• using multiple thresholds to determine multiple corresponding temporal distances; and
• averaging the temporal distances.

9. A droplet attribute analysis arrangement, comprising:

• a nozzle (20) configured to project droplets on a surface (22);
• an event-based camera (24) fixedly attached to the nozzle; and
• an optical device (26) attached to the nozzle, oriented such that it allows the camera to observe a region of interest between the nozzle and the surface;

wherein the camera includes a processor programmed to carry out the method of claim 1.

**Patentansprüche**

1. Computerimplementiertes Verfahren zum Messen von Eigenschaften eines Partikels in Bewegung, umfassend:

• Beobachten eines Bereichs von Interesse mit einem ereignisbasierten Sensor, der derart ausgerichtet ist, dass Linien einer Pixelanordnung des Sensors quer zu einer erwarteten Flugbahn des Partikels (P) durch den Bereich von Interesse liegen;
• Definieren von zwei Referenzlinien aus Pixeln (R1, R2), die durch einen räumlichen Abstand (D) getrennt sind;
• Abtasten einer ersten Gruppe von Ereignissen, die durch eine erste der zwei Referenzlinien erzeugt werden;
• Abtasten einer zweiten Gruppe von Ereignissen, die durch die zweite der zwei Referenzlinien erzeugt werden;
• Bestimmen eines zeitlichen Abstands (T) zwischen der zweiten und der ersten Gruppe von Ereignissen; und
• Bereitstellen eines Längsgeschwindigkeitsfaktors (vy) des Partikels basierend auf dem räumlichen Abstand und dem zeitlichen Abstand;

**dadurch gekennzeichnet, dass** die Partikel eine Größe aufweisen, die sich über mehrere angrenzende Pixel in einer Linie erstreckt, und das Verfahren die folgenden zusätzlichen Schritte umfasst:

• Analysieren einer der ersten und der zweiten Gruppe von Ereignissen über mehrere Zeitschritte hinweg, um einen Umriss des Partikels in Raum-Zeit-Koordinaten (x, t) zu erzeugen, einschließlich räumlicher Komponenten basierend auf den Positionen von ereignisausgelösten Pixeln in den Linien und zeitlicher Komponenten basierend auf den Zeitschritten; und
• Umwandeln der Raum-Zeit-Koordinaten des Umrisses in räumliche Koordinaten (x', y') durch ein Multiplizieren der Zeitschritte (t) der Raum-Zeit-Koordinaten mit dem Längsgeschwindigkeitsfaktor (vy).

2. Verfahren nach Anspruch 1, umfassend:

• Messen von jeweiligen Ereignisraten (ER), die durch die zwei Referenzlinien über mehrere Zeitschritte hinweg erzeugt werden;
• Speichern eines ersten Zeitschritts, bei dem die Ereignisrate, die für die erste Gruppe von Ereignissen gemessen wird, eine Schwelle (ERth) überschreitet;
• Speichern eines zweiten Zeitschritts, bei dem die Ereignisrate, die für die zweite Gruppe von Ereignissen gemessen wird, die Schwelle (ERth) überschreitet; und
• Bereitstellen des zeitlichen Abstands (T) als die Differenz zwischen dem zweiten und dem ersten Zeitschritt.

3. Verfahren nach Anspruch 2 umfassend den Schritt des Messens jeder Ereignisrate durch ein Aggregieren von Ereignissen, die durch eine Gruppe von mehreren angrenzenden Linien, einschließlich der entsprechenden Referenzlinien, erzeugt werden.

4. Verfahren nach Anspruch 1, umfassend:

• Analysieren der ersten und zweiten Gruppe von Ereignissen über mehrere Zeitschritte hinweg, um jeweils einen ersten und zweiten Umriss des Partikels in Raum-Zeit-Koordinaten (x, t) zu erzeugen; und
• Kreuzkorrelieren des ersten und des zweiten Umrisses, um den zeitlichen Abstand (T) zu bestimmen, der zum Bestimmen des Längsgeschwindigkeitsfaktors (vy) verwendet wird.

5. Verfahren nach Anspruch 4, umfassend:

• bei dem Kreuzkorrelieren der Umrisse, ebenso Bestimmen einer räumlichen Querverschiebung zwischen den Umrissen in der Richtung (x) der Linien;
• Bereitstellen eines Quergeschwindigkeitsfaktors (vx) durch ein Dividieren der transversalen räumlichen Verschiebung durch den zeitlichen Abstand; und
• bei dem Umwandeln der Raum-Zeit-Koordinaten in räumliche Koordinaten, Korrigieren der räumlichen Komponenten der Raum-Zeit-Koordinaten basierend auf den Zeitschritten und dem Quergeschwindigkeitsfaktor (vx).

6. Verfahren nach Anspruch 1, umfassend den Schritt des Bestimmens von Größenattributen des Partikels basierend auf dem Umriss in räumlichen Koordinaten.

7. Verfahren nach Anspruch 1, umfassend den Schritt des Bestimmens des Volumens des Partikels basierend auf dem Umriss in räumlichen Koordinaten und einer Annahme über den Querschnitt des Partikels senkrecht zu der längsten Achse des Umrisses.

8. Verfahren nach Anspruch 2, umfassend:

• Verwenden mehrerer Schwellen, um mehrere entsprechende zeitliche Abstände zu bestimmen; und
• Mitteln der zeitlichen Abstände.

9. Tröpfchenattributanalyseanordnung, umfassend:

• eine Düse (20), die konfiguriert ist, um Tröpfchen auf eine Oberfläche (22) zu schießen;
• eine ereignisbasierte Kamera (24), die fest an der Düse angebracht ist; und
• eine optische Vorrichtung (26), die an der Düse angebracht ist, die derart ausgerichtet ist, dass sie es der Kamera ermöglicht, einen Bereich von Interesse zwischen der Düse und der Oberfläche zu überwachen;
wobei die Kamera einen Prozessor einschließt, der programmiert ist, um das Verfahren nach Anspruch 1 vorzunehmen.

**Revendications**

1. Procédé mis en œuvre par ordinateur pour mesurer des attributs d'une particule en mouvement, comprenant les étapes suivantes :

   • observer une région d'intérêt avec un capteur événementiel orienté de sorte que des lignes d'une matrice de pixels du capteur croisent une trajectoire attendue de la particule (P) à travers la région d'intérêt ;
   • définir deux lignes de référence de pixels (R1, R2) séparées par une distance spatiale (D) ;
   • échantillonner un premier groupe d'événements produits par une première des deux lignes de référence ;
   • échantillonner un second groupe d'événements produits par la seconde des deux lignes de référence ;
   • déterminer d'une distance temporelle (T) entre les second et premier groupes d'événements ; et
   • produire un facteur de vitesse longitudinal (vy) de la particule basé sur la distance spatiale et la distance temporelle ;

   **caractérisé en ce que** les particules ont une taille s'étendant sur plusieurs pixels adjacents dans une ligne, et le procédé comprend les étapes supplémentaires suivantes :

   • analyser l'un des premier et second groupes d'événements sur plusieurs pas temporels afin de produire un contour de la particule en coordonnées espace-temps (x, t) incluant des composantes spatiales basées sur les positions des pixels déclenchés par des événements dans les lignes et des composantes temporelles basées sur les pas temporels ; et
   • convertir les coordonnées espace-temps du contour en coordonnées spatiales (x', y') en multipliant les pas temporels (t) des coordonnées espace-temps par le facteur de vitesse longitudinal (vy).

2. Procédé selon la revendication 1, comprenant les étapes suivantes :

   • mesurer les débits d'événements respectifs (ER) produits par les deux lignes de référence sur plusieurs pas temporels ;
   • stocker un premier pas temporel où le débit d'événements mesuré pour le premier groupe d'événements dépasse un seuil (ERth) ;
   • stocker un second pas temporel où le débit d'événements mesuré pour le second groupe d'événements dépasse le seuil (ERth) ; et
   • produire la distance temporelle (T) comme la différence entre les second et premier pas temporels.

3. Procédé selon la revendication 2, comprenant l'étape de mesure de chaque débit d'événements en agrégeant des événements produits par un groupe de plusieurs lignes adjacentes incluant les lignes de référence correspondantes.

4. Procédé selon la revendication 1, comprenant les étapes suivantes :

   • analyser les premier et second groupes d'événements sur plusieurs pas temporels afin de produire des premier et second contours respectifs de la particule en coordonnées espace-temps (x, t) ; et
   • effectuer une corrélation croisée des premier et second contours pour déterminer la distance temporelle (T) utilisée pour déterminer le facteur de vitesse longitudinal (vy).

5. Procédé selon la revendication 4, comprenant les étapes suivants :

   • lors de la corrélation croisée des contours, déterminer également un décalage spatial transversal entre les contours dans la direction (x) des lignes ;
   • produire un facteur de vitesse transversale (vx) en divisant le décalage spatial transversal par la distance temporelle ; et
   • lors de la conversion des coordonnées espace-temps en coordonnées spatiales, corriger les composantes spatiales des coordonnées espace-temps en fonction des pas temporels et du facteur de vitesse transversale (vx).

6. Procédé selon la revendication 1, comprenant l'étape de détermination d'attributs de taille de la particule en fonction du contour en coordonnées spatiales.

7. Procédé selon la revendication 1, comprenant l'étape de détermination du volume de la particule en fonction du contour en coordonnées spatiales et d'une hypothèse sur la section transversale de la particule perpendiculaire au plus long axe du contour.

8. Procédé selon la revendication 2, comprenant les étapes suivantes :

• utiliser plusieurs seuils pour déterminer plusieurs distances temporelles correspondantes ; et

• moyenner les distances temporelles.

9. Dispositif d'analyse d'attributs de gouttelettes, comprenant :

• une buse (20) configurée pour projeter des gouttelettes sur une surface (22) ;
• une caméra événementielle (24) fixée rigidement à la buse ; et
• un système optique (26) attaché à la buse, orienté de sorte qu'il permet à la caméra d'observer une région d'intérêt entre la buse et la surface ;

dans lequel la caméra inclut un processeur programmé pour exécuter le procédé de la revendication 1.

**Fig 1**

**Fig 2**

**Fig 3**

**Fig 4**

**Fig 5**

**Fig 6**

**Fig 7**

**Fig 8A**

$$x' = x - v_x \cdot (t - t_{ref})$$

**Fig 8B**

$$y = v_y \cdot (t - t_{ref})$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190391067 A

**Non-patent literature cited in the description**

- **SUBRAMANIAN S. et al.** A Memory Efficient Algorithm for Real Time Object Counting. *2009 IEEE International Advance Computing Conference (IACC*, 2009